Europäisches Patentamt

European Patent Office

Office européen des brevets

(19)

(11) Veröffentlichungsnummer: **0 170 114**
**B1**

# (12) EUROPÄISCHE PATENTSCHRIFT

(45) Veröffentlichungstag der Patentschrift: **05.09.90**

(21) Anmeldenummer: **85108505.0**

(22) Anmeldetag: **09.07.85**

(51) Int. Cl.⁵: **B 60 R 1/06**, B 60 R 1/08

(54) **Aussenrückspiegel auf der Fahrerseite eines Kraftfahrzeuges.**

(30) Priorität: **28.07.84 DE 3427988**

(43) Veröffentlichungstag der Anmeldung:
**05.02.86 Patentblatt 86/06**

(45) Bekanntmachung des Hinweises auf die
Patenterteilung:
**05.09.90 Patentblatt 90/36**

(84) Benannte Vertragsstaaten:
**AT CH DE FR GB IT LI SE**

(56) Entgegenhaltungen:
**DE-A-3 234 157**
**FR-A-2 334 145**
**US-A-3 574 446**
**US-A-3 664 729**

(73) Patentinhaber: **Adam Opel Aktiengesellschaft**
**Bahnhofsplatz 1 Postfach 1560**
**D-6090 Rüsselsheim (DE)**

(72) Erfinder: **Neumann, Bernhard**
**Böhmerwaldstrasse 2**
**D-6090 Rüsselsheim (DE)**

(74) Vertreter: **Rosenfeld, Jürgen, Dipl. Ing. et al**
**Adam Opel Ag Patentabteilung Bahnhofsplatz 1**
**Postfach 17 10**
**D-6090 Rüsselsheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft einen Außenrückspiegel auf der Fahrerseite eines Kraftfahrzeuges, der durch Einschalten einer Bewegungseinrichtung um eine im wesentlichen senkrecht zur Bewegungsebene des Kraftfahrzeuges stehende Achse aus einer bestimmten Normalstellung vorübergehend in eine zweite Stellung verschwenkbar ist, und nach dem Ausschalten der Bewegungseinrichtung selbsttätig in die Normalstellung zurückschwenkbar ist.

Aus der US-A-3 574 446 ist ein Außenrückspiegel der angegebenen Art bekannt, der durch einen Elektromagneten aus seiner Normalstellung um einen vorgegebenen Winkel von der Fahrerseite weg in eine Stellung schwenkbar ist, in der das Blickfeld des Fahrers nach links erweitert ist, um beim Spurwechsel den Verkehr in der linken Nachbarspur besser beobachten zu können. Der Elektromagnet wird dabei durch den Fahrtrichtungsanzeiger geschaltet, wenn dieser betätigt wird, um eine Richtungsänderung nach links anzuzeigen. Der bekannte Außenrückspiegel weist weiterhin eine transparente Scheibe mit einer eine Blendung verhindernden Beschichtung auf, die vor dem Spiegel angeordnet ist und die unabhängig von dem Spiegel um eine vertikale Achse zwischen einer Normalstellung und einer Abblendstellung bewegbar ist. Die Scheibe wird von einem Elektromagneten in die Abblendstellung geschwenkt, wobei der Elektromagnet zusammen mit der Fahrzeugbeleuchtung einschaltbar ist. Neben einem verhältnismäßig hohen Bauaufwand hat der bekannte Außenrückspiegel den Nachteil, daß bei eingeschalteter Fahrzeugbeleuchtung die Scheibe ständig in ihrer Abblendstellung verbleibt, sodaß die in dieser Stellung eingeschränkte Wirkung des Spiegels und eine entsprechend schlechtere Sicht des Fahrers auch dann gegeben ist, wenn eine Blendung durch ein nachfolgendes Fahrzeug nicht besteht.

Es sind weiterhin Außenrückspiegel mit elekromotorischen Bewegungseinrichtungen allgemein bekannt, die durch entsprechende Elektroschalter in Betrieb gesetzt bzw. abgeschaltet werden können und während ihres Betriebes die gewünschte Verschwenkung des Außenrückspiegels durchführen. Solche Außenrückspiegel dienen dazu, daß der Fahrer sie, ohne erst sein Seitenfenster öffnen zu müssen, bequem, also ohne eigene besondere Kraftaufwendung, in eine für sich geeignete Normalstellung bringen kann. Diese Normalstellung soll alsdann jedoch beibehalten werden, sodaß der Fahrer in gewöhnlicher Sitzposition stets den richtigen Blickwinkel nach hinten durch den Außenrückspiegel hat. Wird der Fahrer bei Nacht durch die Scheinwerfer des nachfolgenden Fahrzeugs geblendet, so wird er sich kaum bereitfinden den Spiegel durch Betätigung der Bewegungseinrichtung zu verstellen, da es nachts schwierig ist, den Spiegel wieder genau in die ursprüngliche Normalstellung zurückzubewegen.

In der DE-OS 26 23 386 wurde daher schon vorgeschlagen, den Außenrückspiegel um eine im wesentlichen parallel zur Bewegungsebene des Kraftfahrzeuges liegende Achse schwenkbar zu gestalten, wobei die Spiegelplatte auf der einen Seite normal spiegelnd und auf ihrer Rückseite, also auf der anderen Seite nur schwach spiegelnd ausgebildet ist. Wird ein solcher Spiegel um 180° um die angegebenen Achse geschwenkt, so verbleibt der Spiegel als solcher in seiner Normalstellung, bringt jedoch im einen Falle die normal spiegelnde Fläche und im anderen Fall die nur schwach spiegelnde Fläche zur Anwendung, wodurch in letzterem Falle der Fahrer nicht mehr geblendet wird. Jedoch hat dieser Vorschlag den Nachteil, daß während der Drehung des Spiegels um 180° der Fahrer in dem Außenrückspiegel praktisch gar nichts sehen kann, also insbesondere nicht ansonsten nach hinten sehen kann.

Der Erfindung liegt die Aufgabe zugrunde, einen Außenrückspiegel der eingangs genannten Art zu schaffen der vom Fahrzeuginneren aus in seiner Normalstellung einstellbar ist und durch einen einfachen Betätigungsvorgang vorübergehend aus seiner Normalstellung in eine blendfreie Abblendstellung bewegt werden kann.

Erfindungsgemäß wird diese Aufgabe dadurch gelöst, daß die Bewegungseinrichtung einen durch Betätigen schaltbarer Mittel steuerbaren, elektrischen Stellmotor aufweist, durch den der Außenrückspiegel bei Einschalten einer ersten Phase zur Fahrerseite hin in eine Abblendstellung und bei Einschalten einer zweiten Phase zurück in die Normalstellung schwenkbar ist und daß für das wechselweise Einschalten der Phasen zeitgesteuerte Schaltmittel vorgesehen sind, die die Einschaltzeit der Phasen auf einen Wert begrenzen, der dem Weg des Stellmotors zum Erreichen der Abblendstellung aus der Normalstellung und umgekehrt entspricht.

Der erfindungsgemäße Außenrückspiegel nutzt auf vorteilhafte Weise einen Stellmotor, der zum Einstellen des Außenrückspiegels in die jeweils erforderliche Normalstellung vorgesehen ist, um den Außenrückspiegel vorübergehend zur Fahrerseite hin in eine Abblendstellung zu verschwenken und anschließend wieder in die Normalstellung zurückzubewegen. Eine zusätzliche Bewegungseinrichtung ist daher nicht erforderlich. Da der erfindungsgemäße Außenrückspiegel zwischen der Normalstellung und der Abblendstellung eine kontinuierliche Schwenkbewegung durchläuft, kann während derselben der Fahrer auch kontinuierlich nach hinten schauen. Es wird somit kein Zeitintervall erzeugt, währenddessen die Sicht des Fahrers nach hinten unterbrochen wäre. Das Zurückschwenken des Außenrückspiegels aus der Abblendstellung in die Normalstellung kann entweder durch einen Betätigungsvorgang, beispielsweise das Loslassen der schaltbaren Mittel, oder zeitlich gesteuert werden. Beispielsweise kann ein Intervallschalter vorgesehen sein, der nur einmal zu Beginn der Verschwenkung zu betätigen ist. Im Falle einer solchen Intervallschaltung verbleibt dann der Außenrückspiegel von selbst während einer bestimmten Zeitspanne zur Fahrerseite hin verschwenkt, aus der er dann wiederum von selbst in seine ursprüngliche Normalstellung zurückkehrt.

Die Steuerung der Einschaltzeit kann nach einem weiteren Vorschlag der Erfindung vorteilhaft dadurch erreicht werden, daß in beide Phasen jeweils ein Zeitintervallrelais geschaltet ist, das nach einer Betätigung eines ihm zugeordneten Steuerschalters selbsthaltend die Phase für eine bestimmte Zeitspanne einschaltet. Der Fahrer kann bei dieser Anordnung durch kurzes Betätigen des einen oder des anderen Steuerschalters den Außenrückspiegel in die Abblendstellung oder zurück in die Normalstellung verschwenken. Dabei ist es seiner freien Wahl überlassen, wie lange der Außenrückspiegel in der Abblendstellung verbleibt. Eine selbsttätige Rückkehr des Außenrückspiegels aus der Abblendstellung in die Normalstellung läßt sich erfindungsgemäß auf einfache Weise dadurch erreichen, daß die Zeitintervallrelais in beiden Phasen an einen gemeinsamen Steuerschalter angeschlossen sind und daß dem in die zweite Phase geschalteten Zeitintervallrelais ein Zeitverzögerungsrelais vorgeschaltet ist, das einen Schaltbefehl des Steuerschalters um eine vorgegebene Zeitspanne verzögert an das Zeitintervallrelais weitergibt. Ein einmaliges Betätigen des Steuerschalters bewirkt somit zugleich ein Verschwenken des Außenrückspiegels in die Abblendstellung und mit einer durch das Zeitverzögerungsrelais bestimmten zeitlichen Verzögerung die Rückkehr in die Normalstellung. Die Abblendverstellung ist hierbei für den Fahrer besonders einfach zu handhaben und es wird weiterhin vermieden, daß der Außenrückspiegel über einen längeren Zeitraum in einer Stellung verbleibt, in der der Rückblickwinkel nach der Seite eingeschränkt ist.

Der Winkel, um den der Außenrückspiegel aus einer Normalstellung zur Fahrerseite hin in eine Abblendstellung vorübergehend verschwenkbar ist beträgt vorzugsweise 4,5° bis 5,5° (Altgrad). Diese Bemessung genügt für die meisten praktischen Anwendungsfälle der Erfindung und gestattet dabei gleichwohl noch durch den Außenrückspiegel nach hinten zu blicken.

Die Schaltbetätigungseinrichtung für die schaltbare Bewegungseinrichtung ist bevorzugterweise im Bereich des Lenkrades des Fahrers angeordnet, also dort selbst an dem Armaturenbrett oder an einem der Betätigungsschalthebel, z.B. für die Beleuchtung oder die Scheibenwischer. Somit wird der Fahrer nicht gezwungen, mit der Hand wie bei einem herkömmlich bekannten, verschwenkbaren Außenrückspiegel weit ab vom Lenkrad nach den Schalteinrichtungen zu suchen, um dieselben zu betätigen. Schließlich wird der Fahrer nach der Erfindung auch nicht mehr gezwungen, in mühsamer Feinarbeit durch ständiges Blicken in den Rückspiegel dessen Normalstellung wieder zurückzufinden, was bei Dunkelheit ohnehin wesentlich erschwert ist.

Nach alledem bietet der erfindungsgemäße Außenrückspiegel erstmals die Möglichkeit, unter Verwendung dessen bekannter Verschwenkbarkeit ihn blendfrei zu machen ohne weitere Unterbrechung des Sicht- bzw. Steuerungs- bzw. Fahrvorganges durch den Fahrer selbst. Die daraus resultierende Erhöhung der Verkehrssicherheit ist offensichtlich.

Diese Vorteile und Einzelheiten der Erfindung sind nachfolgend anhand einer Zeichnung näher erläutert. Es zeigen

Fig. 1 eine schematische Darstellung der Blendsituation bei einem vorausfahrenden und einem nachfolgenden Fahrzeug mit erfindungsgemäßer Außenspiegelabblendung,

Fig. 2 eine schematische Darstellung einer schaltbaren Bewegungseinrichtung zum Verschwenken eines Außenrückspiegels in eine Abblendstellung nach der Erfindung,

Fig. 3 einen Schaltplan einer erfindungsgemäßen Schaltung zur Steuerung der Bewegungseinrichtung gemäß Fig. 2 und

Fig. 4 einen Schaltplan einer weiteren erfindungsgemäßen Schaltung zur Steuerung der Bewegungseinrichtung gemäß Fig. 2.

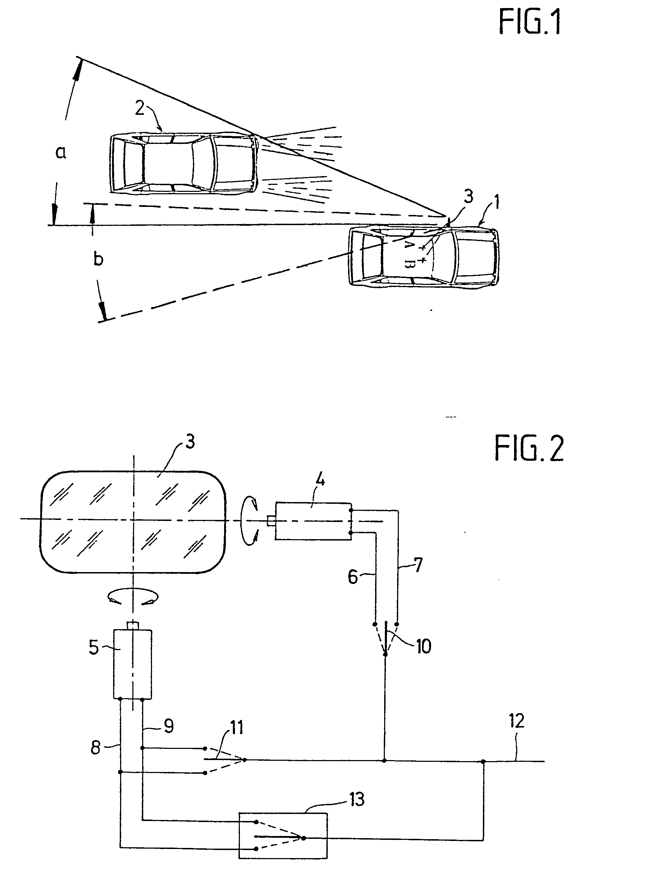

Fig. 1 zeigt von oben eine übliche Verkehrssituation, bei der der Fahrer eines Kraftfahrzeugs 1 über den Außenrückspiegel von den Scheinwerfern eines nachfolgenden Kraftfahrzeugs 2 geblendet wird, das sich auf einer Überholspur befindet. Die Scheinwerfer des Fahrzeugs 2 liegen im Rückblickwinkel a des Außenrückspiegels 3 des Fahrzeugs 1 und werden durch diesen in den Augenpunkt A des Fahrers abgebildet, wodurch dieser stark geblendet wird. Um dies zu vermeiden kann der Fahrer durch Betätigen einer schaltbaren Bewegungseinrichtung den Außenrückspiegel 3 zur Fahrerseite hin in eine Abblendstellung verschwenken. In dieser Abblendstellung werden die Scheinwerfer des Kraftfahrzeugs 2 im Punkt B abgebildet, und treffen daher nicht mehr die Augen des Fahrers. Für den Fahrer ergibt sich in der Abblendstellung ein Rückblickwinkel b, der ihm noch eine ausreichende Beobachtung des nachfolgenden Verkehrs gestattet.

Fig. 2 zeigt einen Außenrückspiegel 3 eines Kraftfahrzeugs, der durch einen elektrischen Stellmotor 4 um eine horizontale Achse und einen elektrischen Stellmotor 5 um eine vertikale Achse verschwenkbar ist. Beide Stellmotore 4, 5 sind über zwei Phasen 6, 7 und 8, 9 jeweils an die Arbeitskontakte eines Einstellschalters 10, 11 angeschlossen, durch die eine Verbindung mit einer spannungsführenden Hauptphase 12 schaltbar ist. Durch Betätigen der Einstellschalter 10, 11 in der einen oder anderen Richtung können die Stellmotoren 4, 5 nach links oder rechts gedreht und der Außenrückspiegel entsprechend in horizontaler und vertikaler Richtung in eine gewünschte Normalstellung gebracht werden.

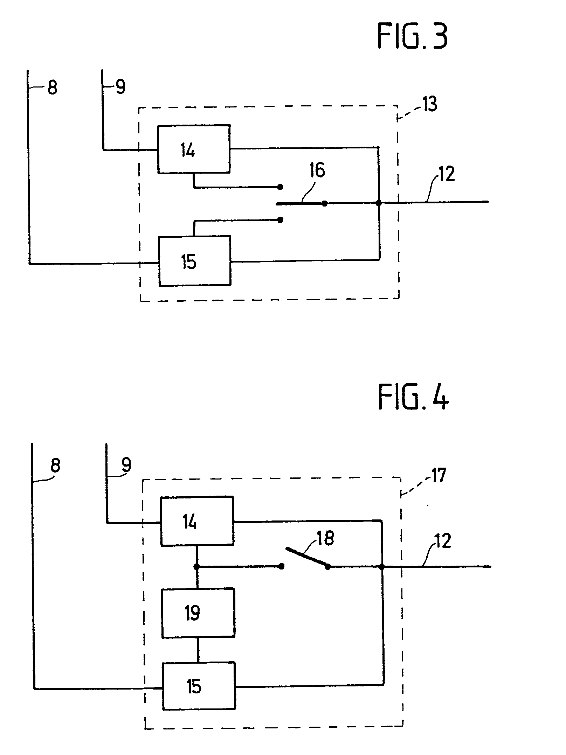

Parallel zu dem Einstellschalter 11 sind die Phasen 8, 9 an eine Schaltvorrichtung 13 angeschlossen, durch die sie ebenfalls wechselweise an die Hauptphase 12 geschaltet werden können. Die Schaltvorrichtung 13 dient zum vorübergehenden Verschwenken des Außenrückspiegels 3 aus seiner Normalstellung zur Fahrerseite hin in eine Abblendstellung. Wie aus Fig. 3 zu ersehen besteht die Schaltvorrichtung 13 aus zwei elektronischen Zeitintervallrelais 14, 15. Das Zeitintervallrelais 14 ist in die Phase 9 und das Zeitintervallrelais 15 in die Phase 8 geschaltet. Die Steuerkreise der beiden Zeitintervallrelais 14, 15 sind jeweils mit einem Arbeitskontakt eines in zwei Richtungen betätigbaren Tastschalter 16 verbunden, durch den die Steuerkreise wechselweise an die Hauptphase 12 schaltbar sind. Die Zeitintervallrelais 14, 15 sind jeweils für die gleiche Zeitspanne selbsthaltend, das heißt sie schalten nach einer Ansteuerung durch Betätigen des Tastschalters 16 die angeschlossene Phase 8 bzw. 9 für die Dauer der Zeitspanne an die Hauptphase 12, um anschließend wieder abzufallen und die Verbindung zu unterbrechen.

Mit der beschriebenen Schalteinrichtung 13 läßt sich der Außenrückspiegel 3 auf einfache Weise in eine Abblendrichtung zurückbewegen. Wird der Tastschalter 16 in der dargestellten Lage vorübergehend nach oben betätigt, so wird das Zeitintervallrelais 14 angesteuert und der Stellmotor 5 über die Phase 9 für die Dauer der Haltezeit des Zeitintervallrelais 14 eingeschaltet. Hierdurch dreht sich der Stellmotor 5 im Uhrzeigersinn um einen durch seine Einschaltzeit bestimmten Drehwinkel und verschwenkt dabei den Rückspiegel 3 in die Abblendstellung. Da das Zeitintervallrelais 14 danach wieder abfällt, bleibt der Außenrückspiegel 3 in der Abblendstellung stehen. Will der Fahrer den Außenrückspiegel 3 wieder in seine Normalstellung zurückbewegen, so betätigt er den Tastschalter 16 nach unten, wodurch das Zeitintervallrelais 15 angesteuert und der Stellmotor 5 über die Phase 8 eingeschaltet wird. Da die Haltezeit des Zeitintervallrelais 15 mit der des Zeitintervallrelais 14 übereinstimmt, dreht sich der Stellmotor 5 nunmehr um den gleichen Drehwinkel in die entgegengesetzte Richtung und bewegt dadurch den Außenrückspiegel 3 in seine Normalstellung zurück.

Fig. 4 zeigt eine Schalteinrichtung 17, die anstelle der Schalteinrichtung 13 verwendet werden kann und bei der die Phasen 8, 9 ebenfalls durch elektronische Zeitintervallrelais 14, 15 an die Hauptphase 12 geschaltet werden. Die Steuerkreise der beiden Zeitintervallrelais 14, 15 sind hierbei jedoch gemeinsam an einen Arbeitskontakt eines Tastschalters 18 angeschlossen. Weiterhin ist in den Steuerkreis des die Rückbewegung des Außenrückspiegels in seine Normalstellung schaltenden Zeitintervallrelais 15 ein elektronisches Zeitverzögerungsrelais 19 geschaltet, das eine Verzögerung der Ansteuerung des Zeitintervallrelais 15 um eine bestimmte Zeitspanne bewirkt.

Wird bei der Schalteinrichtung 17 der Steuerschalter 18 kurzzeitig betätigt, so schaltet das Zeitintervallrelais 14 über die Phase 9 den Stellmotor 5 für eine begrenzte Zeitspanne ein, wodurch der Außenrückspiegel 3 in die Abblendstellung gelangt. Von dem Zeitverzögerungsrelais 19 wird der Schaltimpuls des Tastschalters 18 für die Zeitspanne zurückgehalten, für die die Abblendstellung des Außenrückspiegels im allgemeinen benötigt wird. Danach gibt das Zeitverzögerungsrelais 19 den Schaltimpuls an das Zeitintervallrelais 15 weiter, so daß nun der Stellmotor 5 über die Phase 8 eingeschaltet und der Außenspiegel in seine Normalstellung zurückbewegt wird. Die Schalteinrichtung 17 bewirkt somit nach jeder Steuerung in die Abblendstellung eine selbsttätige Rückkehr des Außenrückspiegels in seine Normalstellung. Will der Fahrer den Außenrückspiegel länger als durch das Zeitverzögerungsrelais 19 vorgegeben in der Abblendstellung halten, so muß er den Tastschalter 18 mehrfach betätigen, wobei bei jeder Betätigung das Zeitverzögerungsrelais 19 wieder auf Null gesetzt wird.

## Patentansprüche

1. Außenrückspiegel (3) auf der Fahrerseite eines Kraftfahrzeuges (1), der durch Einschalten einer Bewegungseinrichtung (5) um eine im wesentlichen senkrecht zur Bewegungsebene des Kraftfahrzeuges stehende Achse aus einer bestimmten Normalstellung (a) vorübergehend in eine zweite Stellung (b) verschwenkbar ist, und nach dem Ausschalten der Bewegungseinrichtung (5) selbsttätig in die Normalstellung zurückschwenkbar ist, dadurch gekennzeichnet, daß die Bewegungseinrichtung einen durch Betätigen schaltbarer Mittel (13, 17) steuerbaren, elektrischen Stellmotor (5) aufweist, durch den der Außenrückspiegel (3) bei Einschalten einer ersten Phase (9) zur Fahrerseite hin in eine Abblendstellung (b) und bei Einschalten einer zweiten Phase (8) zurück in die Normalstellung (a) schwenkbar ist und daß für das wechselweise Einschalten der Phasen (9, 8) zeitgesteuerte Schaltmittel (14, 15) vorgesehen sind, die die Einschaltzeit der Phasen (9, 8) auf einen Wert begrenzen, der dem Weg des Stellmotors (5) zum Erreichen der Abblendstellung (b) aus der Normalstellung (a) und umgekehrt entspricht.

2. Außenrückspiegel nach Anspruch 1, dadurch gekennzeichnet, daß in beide Phasen (8, 9) jeweils ein Zeitintervallrelais (14, 15) geschaltet ist, das nach einer Betätigung eines ihm zugeordneten Steuerschalters (16) selbsthaltend die Phase (8 bzw. 9) für eine bestimmte Zeitspanne einschaltet.

3. Außenrückspiegel nach Anspruch 2, dadurch gekennzeichnet, daß die Steuerkreise der Zeitintervallrelais (14, 15) in beiden Phasen (8, 9) an einem Steuerschalter (18) zusammengeschaltet sind und daß dem Steuereingang des in die zweite Phase (8) geschalteten Zeitintervallrelais (15) ein Zeitverzögerungsrelais (19) vorgeschaltet ist, das einen Schaltbefehl des Steuerschalters (18) um eine vorgegebene Zeitspanne verzögert an das Zeitintervallrelais (15) weitergibt.

4. Außenrückspiegel nach einem vorhergehenden Anspruch dadurch gekennzeichnet, daß der Winkel, um den er aus der Normalstellung (a) zur Fahrerseite hin in die Abblendstellung (b) vorübergehend schwenkbar ist, 4,5° bis 5,5° beträgt.

## Revendications

1. Rétroviseur extérieur (3) situé côté conducteur d'un véhicule automobile (1), qui est susceptible de pivoter, par mise en circuit d'un dispositif de déplacement (5), autour d'un axe pratiquement perpendiculaire au plan de déplacement du véhicule automobile, d'une position normale (a) déterminée à une deuxième position (b) provisoire, et de revenir automatiquement en position normale après mise hors circuit du dispositif de déplacement (5), caractérisé en ce que le dispositif de déplacement présente un servomoteur (5) électrique, commandable par actionnement de moyens de commutation (13, 17), au moyen duquel le rétroviseur extérieur (3) est susceptible de pivoter, lors de l'enclenchement d'une première phase (9), vers le côté conducteur en une position d'occultation (b) et de revenir en position normale (a) lors de l'enclenchement d'une deuxième phase (8), et en ce que, pour l'enclenchement alterné des phases (9, 8), des moyens de commutation (14, 15) commandés en fonction du temps sont prévus, qui limitent la durée d'enclenchement des phases (9, 8) à une certaine valeur qui correspond à la course du servomoteur (5) pour atteindre la position d'occultation (b) en partant de la position normale (a) et inversement.

2. Rétroviseur extérieur selon la revendication 1, caractérisé en ce que, dans les deux phases (8, 9), il est chaque fois mis en circuit un relais à intervalle de temps (14, 15) qui enclenche avec auto-maintien la phase (8 ou 9) pour un intervalle de temps déterminé, après actionnement d'un commutateur de commande (16) qui lui est associé.

3. Rétroviseur extérieur selon la revendication 2, caractérisé en ce que les circuits de commande des relais à intervalle de temps (14, 15) des deux phases (8, 9) sont raccordés en commun à un commutateur de commande (18) et en ce qu'un relais à temporisation (19) est branché en amont de l'entrée de commande du relais à intervalle de temps (15 mis en circuit dans la deuxième phase (8) et transmet au relais à intervalle de temps (15) un ordre d'enclenchement du commutateur de commande (18) en le retardant d'un intervalle de temps prédéterminé.

4. Rétroviseur extérieur selon l'une des revendications précédentes, caractérisé en ce que l'angle dont il peut pivoter à partir de la position normale (a) vers le côté conducteur, pour atteindre la position d'occultation (b) provisoire, est de 4,5° à 5,5°.

## Claims

1. Wing mirror (3) on the driver's side of a motor vehicle (1), which is pivotable by switching on an actuator (5) about an axis essentially perpendicular to the plane of movement of the motor vehicle, out of a certain normal position (a) temporarily into a second position (b), and after switching off the actuator (5) is automatically pivotable back to the normal position, characterised in that the actuator comprises an electric servo motor (5) which is controllable by operating switchable means (13, 17) and by which the wing mirror (3) can be pivoted towards the driver's side into an anti-dazzle position (b) on switching on a first phase (9) and back into the normal position (a) on switching on a second phase (8), and that for alternately switching on the phases (9, 8), time-controlled switching means (14, 15) are provided which limit the switching-on time of the phases (9, 8) to a value which corresponds to the path of the servo motor (5) for reaching the anti-dazzle position (b) from the normal position (a) and vice versa.

2. Wing mirror according to claim 1, characterised in that to each of the two phases (8, 9) is connected a timing relay (14, 15) which after operation of an associated control switch (16) switches the phase (8 or 9) on for a given period of time in self-locking relationship.

3. Wing mirror according to claim 2, characterised in that the control circuits of the timing relays (14, 15) in both phases (8, 9) are connected to a common control switch (18) and that connected to the control input of timing relay (15) connected to the second phase (8) is a time lag relay (19) which transmits a switching command of the control switch (18) to timing relay (15) after a given time lag.

4. Wing mirror according to any preceding claim, characterised in that the angle through which it is pivotable temporarily out of the normal position (a) towards the driver's side into the anti-dazzle position (b) is 4.5° to 5.5°.

EP 0 170 114 B1

FIG.1

FIG.2

FIG.3

FIG.4